# EUROPÄISCHE PATENTSCHRIFT

(11) **EP 3 665 060 B1**
(45) Veröffentlichungstag und Bekanntmachung des Hinweises auf die Patenterteilung: **10.08.2022**
(21) Anmeldenummer: 18737499.6
(22) Anmeldetag: 15.06.2018
(51) Int. Cl.: B60W 50/00, B60W 40/06, B60W 40/064, B60W 40/068

(54) **VERFAHREN ZUM BESTIMMEN EINES REIBWERTS FÜR EINEN KONTAKT ZWISCHEN EINEM REIFEN EINES FAHRZEUGS UND EINER FAHRBAHN UND VERFAHREN ZUM STEUERN EINER FAHRZEUGFUNKTION EINES FAHRZEUGS**
METHOD FOR DETERMINING A FRICTION VALUE FOR A CONTACT BETWEEN A TYRE OF A VEHICLE AND A ROAD, AND METHOD FOR CONTROLLING A VEHICLE FUNCTION OF A VEHICLE
PROCÉDÉ DE DÉTERMINATION D'UN COEFFICIENT DE FROTTEMENT POUR UN CONTACT ENTRE UN PNEUMATIQUE D'UN VÉHICULE ET UNE CHAUSSÉE ET PROCÉDÉ POUR COMMANDER UNE FONCTION DE VÉHICULE D'UN VÉHICULE

(30) Priorität: 11.08.2017 DE 102017214030
(43) Veröffentlichungstag der Anmeldung: 17.06.2020
(73) Patentinhaber: Robert Bosch GmbH, 70442 Stuttgart (DE)
(72) Erfinder: LELLMANN, Christian, 70435 Stuttgart (DE)
(86) Internationale Anmeldenummer: PCT/EP2018/066009
(87) Internationale Veröffentlichungsnummer: WO 2019/029876

(56) Entgegenhaltungen:
- DE-A1-102012 112 725
- Andreas Andersson: "Road-Tire Friction Estimation for AFS Vehicle Control", , 1. August 2006 (2006-08-01), XP055501201, Gefunden im Internet: URL:http://lup.lub.lu.se/student-papers/re cord/8847828/file/8859388.pdf [gefunden am 2018-08-22]
- KWON TAE J ET AL: "Modelling of winter road surface temperature (RST) - A GIS-based approach", 2017 4TH INTERNATIONAL CONFERENCE ON TRANSPORTATION INFORMATION AND SAFETY (ICTIS), IEEE, 8. August 2017 (2017-08-08), Seiten 551-556, XP033154995, DOI: 10.1109/ICTIS.2017.8047820 [gefunden am 2017-09-20]
- KYLE SCHMITT ET AL: "A Gaussian Process-Based Approach for Handling Uncertainty in Vehicle Dynamics Simulation", 2008 ASME INTERNATIONAL MECHANICAL ENGINEERING CONGRESS AND EXPOSITION, IMECE 2008, 12. Juni 2008 (2008-06-12), Seiten 617-628, XP055500668, USA DOI: 10.1115/IMECE2008-66664 ISBN: 978-0-7918-4872-2

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Für Fahrzeugbewegungen kann unter anderem der Reibwert zwischen Fahrzeug und Fahrbahn von Bedeutung sein. Für eine direkte aktive Reibwertmessung in speziellen Situationen, wie beispielsweise einer Flugfeldreibwertbestimmung, können Messfahrzeuge mit Reibwertmesstechnik zum Einsatz kommen.

Die DE 10 2005 060 219 A1 beschreibt eine Abschätzung eines Reibkoeffizienten zwischen Straße und Reifen eines Kraftfahrzeuges.

Andreas Andersson: "Road-Tire Friction Estimation for AFS Vehicle Control", 1. August 2006 (2006-08-01), XP055501201, Gefunden im Internet: URL:http://lup.lub.lu.se/studentpapers/record/8847828/file/8859388.pdf, [gefunden am 2018-08-22], offenbart eine Schätzung eines Straßenreibwerts mit einem Kalman-ähnlichen Filter, wobei der Radschlupf als eine mit dem Reibwert korrelierbare Variable durch Verarbeitung von Sensorsignalen als Messgröße bestimmt wird, wobei durch eine rekursive, modellbasierte Methode der kleinsten Quadrate filterseitig ein aktueller Schätzwert durch Addition von mit ihren korrespondierenden Kovarianzen gewichteten vorangegangenen Schätzwerten bestimmt wird.

KWON TAE J ET AL: "Modelling of winter road surface temperature (RST) - A 15 GISbased approach", 2017 4TH INTERNATIONAL CONFERENCE ON TRANSPORTATION INFORMATION AND SAFETY (ICTIS), IEEE, 8. August 2017 (2017-08-08), Seiten 551-556, XP033154995, [gefunden am 2017-09-20], zeigt Regression-Kriging für eine Schätzung von Straßentemperaturen.

KYLE SCHMITT ET AL: "A Gaussian Process-Based Approach for Handling Uncertainty in Vehicle Dynamics Simulation", 2008 ASME INTERNATIONAL 25 MECHANICAL ENGINEERING CONGRESS AND EXPOSITION, IMECE 2008, 12. Juni 2008 (2008-06-12), Seiten 617-628, XP055500668, USA, ISBN: 978-0-7918-4872-2, offenbart die Ermittlung eines Reibwerts unter Verwendung von Reibwerten benachbarter Orte im Zusammenhang mit (Semi) Variogramm-basiertem Schätzen und Kriging.

Die DE 10 2012 112 725 A1 betrifft ein Verfahren bzw. eine Vorrichtung zur Schätzung eines Reibwerts in einem fahrenden Fahrzeug.

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann ein Reibwert zwischen einer Fahrbahn und einem Fahrzeug insbesondere durch einen zeitfolgenbasierten statistischen Ansatz bestimmt werden. Hierbei kann der Reibwert beispielsweise unter Verwendung von Sensorikdaten bzw. Sensorsignalen als ein Schätzwert bzw. eine Wahrscheinlichkeitsverteilung von Reibwerten bestimmt werden. Hierzu können Sensorsignale insbesondere unter Verwendung eines Regressionsmodells bzw. Regressionsalgorithmus verarbeitet werden. Der Reibwert kann zum Steuern einer Fahrzeugfunktion eines Fahrzeugs verwendet werden, insbesondere einer Assistenzfunktion. Insbesondere kann eine Cloudbasierte Reibwertschätzung und -prädiktion unter Verwendung eines Regressionsmodells, insbesondere eines linearen Regressionsalgorithmus, realisiert werden.

Vorteilhafterweise kann gemäß Ausführungsformen insbesondere eine genaue und zuverlässige Einschätzung einer Reibung zwischen Fahrzeug und Fahrbahn ermöglicht werden. Hierbei können beispielsweise Daten aus einer Mehrzahl von Quellen verwendet werden und somit Schwarmwissen genutzt werden. So können insbesondere auch Auswirkungen etwaiger Sensorfehler verringert werden und Ergebnisse statistischer Auswertung für die Reibwertbestimmung verbessert werden. Des Weiteren kann beispielsweise ein großer Nutzerkreis angesprochen werden. Auch kann ein Einrichtungsaufwand zum Nutzen der Reibwertbestimmung gering und kostengünstig gehalten werden, insbesondere im Vergleich zu dedizierter Reibwert-Sensorik. Optional kann die Reibwertbestimmung kann mit anderen Connectivity-Funktionen kombiniert werden. Insbesondere kann die Reibwertbestimmung Ergebnisse über Straßenabschnitte auch für Fahrzeuge bereitstellen, die solche Straßenabschnitte noch nicht selbst befahren haben.

Es wird ein Verfahren zum Bestimmen eines Reibwerts für einen Kontakt zwischen einem Reifen eines Fahrzeugs und einer Fahrbahn vorgestellt, wobei das Verfahren folgende Schritte aufweist:
Verarbeiten von Sensorsignalen, um verarbeitete Sensorsignale zu erzeugen, wobei die Sensorsignale mindestens von zumindest einer Erfassungseinrichtung eingelesene, mit dem Reibwert korrelierbare Zustandsdaten repräsentieren,
wobei die verarbeiteten Sensorsignale zumindest einen vorläufigen Reibwert repräsentieren; und
Ermitteln des Reibwerts unter Verwendung der verarbeiteten Sensorsignale und eines Regressionsmodells.

Dieses Verfahren kann beispielsweise in Software oder Hardware oder in einer Mischform aus Software und Hardware beispielsweise in einer Vorrichtung oder einem Steuergerät implementiert sein. Hierbei kann der Reibwert als ein Schätzwert und zusätzlich oder alternativ als eine Wahrscheinlichkeitsverteilung einer Reibung an einer bestimmten Stelle oder Region der Fahrbahn für einen Zeitpunkt bestimmt werden. Der Reibwert und der vorläufige Reibwert können auch jeweils einen Wertebereich repräsentieren, wobei der Reibwert und der vorläufige Reibwert beispielsweise jeweils einen Mittelwert und ein Konfidenzintervall oder dergleichen repräsentieren können. Der Reibwert kann zur Verwendung für eine Ansteuerung einer Fahrzeugfunktion eines Fahrzeugs bestimmt sein, insbesondere eine Assistenzfunktion oder ein Assistenzsystem eines Fahrzeugs. Die Zustandsdaten können durch die zumindest eine Erfassungsseinsrichtung gewonnene, physikalische Messwerte repräsentieren. Das Verfahren kann auch einen Schritt des Einlesens der Sensorsignale von einer Schnittstelle zu der zumindest einen Erfassungseinrichtung aufweisen. Auch kann das Verfahren einen Schritt des Bereitstellens des Reibwerts in Gestalt eines Steuersignals zur Ausgabe an eine Schnittstelle zu mindestens einem Fahrzeug aufweisen. Das Regressionsmodell kann ausgebildet sein, um eine lineare Regression an dem zumindest einen vorläufigen Reibwert durchzuführen. Auch kann das Regressionsmodell einen Regressionsalgorithmus und zusätzlich oder alternativ zumindest ein lineares Polynom aufweisen. Der Reibwert kann auch als ein Ergebnisreibwert bezeichnet werden. Die Sensorsignale können zu unterschiedlichen Zeitpunkten eingelesene Zustandsdaten repräsentieren. Zusätzlich oder alternativ können die Sensorsignale Zustandsdaten bezüglich eines die Fahrbahn aufweisenden Umgebungsbereichs repräsentieren.

Gemäß einer Ausführungsform können im Schritt des Ermittelns mehrere vorläufige Reibwerte für jeweils einen Zeitpunkt abhängig von Konfidenzintervallen der mehreren vorläufigen Reibwerte und zusätzlich oder alternativ unter Verwendung gewichteter Mittelwerte zu dem Reibwert aggregiert werden. Eine solche Ausführungsform bietet den Vorteil, dass unter Berücksichtigung von beispielsweise auf verschiedene Weisen berechneter vorläufiger Reibwerte ein zuverlässiger und genauer Reibwert bestimmt werden kann.

Auch kann im Schritt des Ermittelns das Regressionsmodell abhängig von aktuellen und zusätzlich oder alternativ vergangenen vorläufigen Reibwerten und zusätzlich oder alternativ unter Verwendung der Methode der kleinsten Quadrate, insbesondere bei möglicher Gewichtung der Daten, geändert werden. Eine solche Ausführungsform bietet den Vorteil, dass eine situationsgerechte Aktualisierung des Regressionsmodells ermöglicht wird, um auf sich verändernde Bedingungen zuverlässig und genau reagieren zu können. Zusätzlich ist eine Prädiktion des Reibwerts durch Extrapolation möglich, da das Regressionsmodell einen Zeitverlauf der ermittelten vorläufigen Reibwerte darstellt.

Erfindungsgemäß wird im Schritt des Ermittelns eine Mehrzahl von Regressionsmodellen verwendet . Hierbei wird für jede einer Mehrzahl von geografischen Regionen ein dediziertes Regressionsmodell der Mehrzahl von Regressionsmodellen verwendet .

Jede geografische Region kann einen Teilabschnitt der Fahrbahn bezogen auf eine Längserstreckung der Fahrbahn aufweisen. Eine solche Ausführungsform bietet den Vorteil, dass regionale Unterschiede der Geografie berücksichtigt werden können, um den Reibwert sicher und exakt bestimmen zu können.

Zudem kann im Schritt des Ermittelns der Reibwert für eine den Umgebungsbereich aufweisende geografische Region ermittelt werden. Hierbei kann im Schritt des Ermittelns der Reibwert unter Verwendung zumindest eines Reibwertes für mindestens eine zu der geografischen Region benachbarte, weitere geografische Region ermittelt werden. Jede geografische Region kann einen Teilabschnitt der Fahrbahn bezogen auf eine Längserstreckung der Fahrbahn aufweisen. Dabei kann im Schritt des Verarbeitens jedes Sensorsignal einer geografischen Region zugeordnet werden. Eine solche Ausführungsform bietet den Vorteil, dass auch eine Reibwertkarte oder dergleichen mit regional zuverlässig und genau ermittelten Reibwerten generiert werden kann.

Gemäß einer Ausführungsform können im Schritt des Verarbeitens Sensorsignale verarbeitet werden, die von einem Umgebungssensor zumindest eines Fahrzeugs, einem Infrastruktursensor für den Umgebungsbereich und zusätzlich oder alternativ mindestens einem Fahrdatensensor des Fahrzeugs eingelesene Zustandsdaten repräsentieren. Zusätzlich oder alternativ können im Schritt des Verarbeitens Sensorsignale verarbeitet werden, die Umgebungsdaten für den Umgebungsbereich, Infrastrukturdaten für den Umgebungsbereich und zusätzlich oder alternativ Fahrdaten des Fahrzeugs repräsentieren. Die Umgebungsdaten können Messwerte von zumindest einem Umgebungssensor repräsentieren, wie beispielsweise Wetterdaten, insbesondere Temperatur, Regen, Schnee, Luftfeuchtigkeit, Luftdruck, Sonneneinstrahlung etc., und zusätzlich oder alternativ Umfelddaten von einer fahrzeuginternen Umfeldsensorik, wie beispielsweise Kamera, Radar, Wärmebild, Lidar etc. Die Infrastrukturdaten können Messwerte von zumindest einem Infrastruktursensor repräsentieren, insbesondere mittels einer Straßensensorik erfasste Daten, wie beispielsweise eine Temperatur eines Fahrbahnbelags, eine Feuchte auf einer Fahrbahnoberfläche, eine Anzahl von Fahrzeugen etc. Die Fahrdaten können Messwerte von zumindest einem Fahrdatensensor repräsentieren, wie beispielsweise Inertialsensorik, Odometrie, Schlupferfassung, Sensorik eines Lenksystems und zusätzlich oder alternativ eines Assistenzsystems zumindest eines Fahrzeugs etc. Eine solche Ausführungsform bietet den Vorteil, dass vielfältige Möglichkeiten für eine Gewinnung von Zustandsdaten ausgenutzt werden können.

Es wird auch ein Verfahren zum Steuern einer Fahrzeugfunktion eines Fahrzeugs vorgestellt, wobei ein Reibwert gemäß einer Ausführungsform des vorstehend genannten Verfahrens bestimmt wird und das Verfahren zusätzlich folgende Schritte aufweist:
Empfangen eines Steuersignals, das unter Verwendung des bestimmten Reibwertes erzeugt ist; und
Ansteuern der Fahrzeugfunktion unter Verwendung des empfangenen Steuersignals.

Dieses Verfahren kann beispielsweise in Software oder Hardware oder in einer Mischform aus Software und Hardware beispielsweise in einer Vorrichtung oder einem Steuergerät implementiert sein. Die Fahrzeugfunktion kann eine Assistenzfunktion eines Assistenzsystems des Fahrzeugs repräsentieren. Bei dem Fahrzeug kann es sich um ein Fahrzeug für hochautomatisiertes Fahren handeln.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuerund/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines vernetzten Systems gemäß einem Ausführungsbeispiel;
Fig. 2 eine schematische Darstellung von Teilen des Systems aus Fig. 1;
Fig. 3 ein Ablaufdiagramm eines Verfahrens zum Bestimmen gemäß einem Ausführungsbeispiel;
Fig. 4 ein Ablaufdiagramm eines Verfahrens zum Steuern gemäß einem Ausführungsbeispiel;
Fig. 5 ein Ablaufdiagramm eines Bestimmungsprozesses gemäß einem Ausführungsbeispiel;
Fig. 6 eine schematische Darstellung einer Reibwertkarte mit geografischen Regionen gemäß einem Ausführungsbeispiel; und
Fig. 7 ein Reibwert-Zeit-Diagramm gemäß einem Ausführungsbeispiel.

Bevor Ausführungsbeispiele nachfolgend unter Bezugnahme auf die Figuren eingehender beschrieben sind, werden zunächst Hintergründe und Grundlagen von Ausführungsbeispielen kurz erläutert.

Entwicklungen im Bereich vernetzter Fahrzeuge ermöglichen beispielsweise mittels sogenannter Connectivity-Einheiten einen Austausch von Sensorik-Daten über aktuelle Fahrbahn, Geschwindigkeit, Verkehrssituation etc. Durch eine Verarbeitung solcher Daten und einen daraus resultierenden Informationsgewinn über Straßenabschnitte können beispielsweise hochautomatisiertes Fahren und prädiktive Fahrerassistenzsysteme mit einem Zugewinn an Sicherheit betrieben werden. Insbesondere können einem Fahrzeug Informationen über eine Umgebung bereitgestellt, die seitens des Fahrzeugs allein mit eigener Sensorik nicht generieren könnten.

In diesem Kontext ist auch der Reibwert eines Kontakt zwischen Straße bzw. Fahrbahn und Fahrzeug bedeutsam. In Personenkraftwagen und dergleichen sind üblicherweise keine dedizierten Reibwertsensoren verbaut. Insbesondere ist es durch serverseitige Verarbeitung vieler Sensorikdaten von vielen verschiedenen Fahrzeugen, z. B. Beschleunigungssensorik, in Kombination mit Wettersensorik und straßenseitiger Sensorik, z. B. Glättesensoren, gemäß Ausführungsformen möglich, einen Reibwert für Straßenabschnitte zu bestimmen bzw. zu schätzen. Solche Informationen über den Reibwert können dann zur weiteren Funktionsentwicklung mit dem Ziel der Erhöhung von Sicherheit und Komfort verwendet werden. Straßenreibwerte, in einer Reibwertkarte eingetragen, können zum Beispiel genutzt werden, um automatisiert Fahrzeuggeschwindigkeiten zum Beispiel vor Kurven zu setzen. So können gefährliche Situationen oder Unfälle durch Abkommen von der Fahrspur, insbesondere bei schwierigen Straßenverhältnissen wie Nässe oder Schnee, vermieden werden.

Für eine direkte aktive Reibwertmessung in speziellen Situationen, z. B. Flugfeldreibwertbestimmung, gibt es Messfahrzeuge mit Reibwertmesstechnik. Hier seien beispielsweise der sogenannte Surface Friction Tester sowie die sogenannte Sideway-force Coefficient Routine Investigation Machine genannt. Beide basieren auf einer Kraftmessung. Der Surface Friction Tester ist ein Fahrzeuganhänger mit drei Rädern. Das dritte Rad wird bis in den physikalischen Grenzbereich, bis zum Reifenstillstand, abgebremst. Über die dazu nötige Bremskraft bzw. das dazu nötige Bremsmoment lässt sich die Reibkraft und mit Hilfe der bekannten Normalkraft der Reibwert bestimmen. Die Sideway-force Coefficient Routine Investigation Machine bestimmt die Reibkraft über die Seitenkraft eines fünften, um 20 Grad zur Fahrtrichtung geneigten Rades. Der Reibwert kann wieder mit bekannter Normalkraft bestimmt werden.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

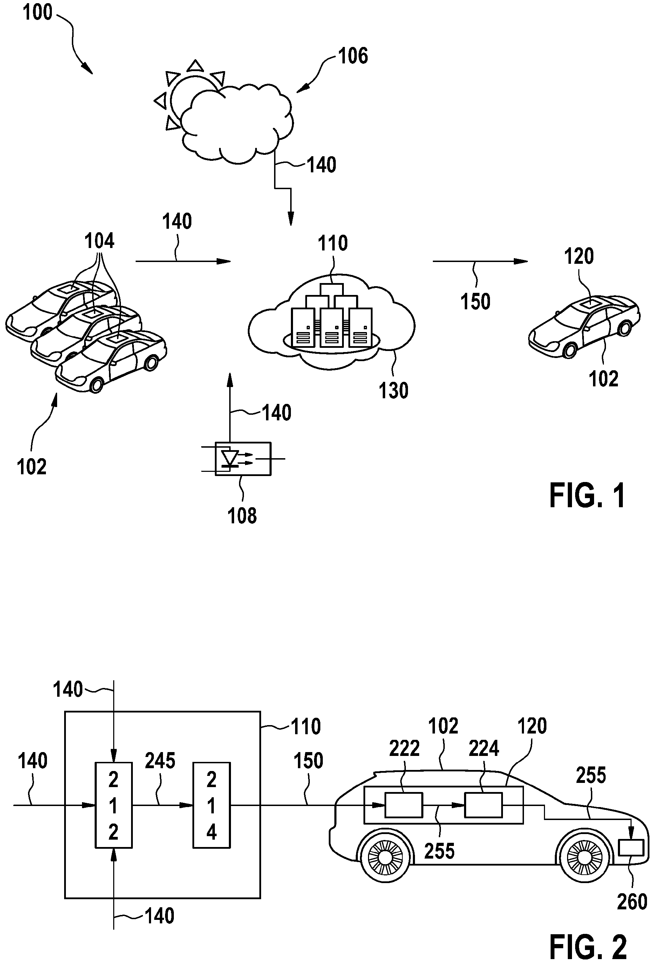

Fig. 1 zeigt eine schematische Darstellung eines vernetzten Systems 100 gemäß einem Ausführungsbeispiel. Das System 100 ist ausgebildet, um einen Reibwert für Straßenverkehr zu bestimmen und verwendbar zu machen. Mindestens weist das System 100 hierzu eine erste Vorrichtung 110 und eine zweite Vorrichtung 120 auf. Ferner dem System 100 zugehörig und/oder zugeordnet sind lediglich beispielhaft vier Fahrzeuge 102, Fahrzeugsensoren 104 in Gestalt von Fahrdatensensoren und/oder fahrzeuggebundenen Umgebungssensoren, beispielhaft lediglich ein Umgebungssensor 106, beispielhaft lediglich ein Infrastruktursensor 108 sowie eine Server-Einrichtung 130, ein sogenanntes Server-Backend 130, eine Datenwolke 130 bzw. eine sogenannte Cloud 130. Eine signalübertragungsfähige Vernetzung innerhalb des Systems 100 kann beispielsweise über Funk oder eine andere Datenübertragungsart realisiert sein.

Dabei ist die erste Vorrichtung 110 als ein Teil der Server-Einrichtung 130 realisiert. Die zweite Vorrichtung 120 ist aus Darstellungsgründen in Fig. 1 lediglich beispielhaft in einem der Fahrzeuge 102 angeordnet, das hier als ein Empfängerfahrzeug 102 bezeichnet werden kann. Die Fahrdatensensoren 104 sind lediglich beispielhaft in drei der Fahrzeuge 102 angeordnet, die hier als Senderfahrzeuge 102 bezeichnet werden können. Auch das Empfängerfahrzeug 102 kann einen Fahrzeugsensor 104 aufweisen. Auch die Senderfahrzeuge 102 können jeweils eine zweite Vorrichtung 120 aufweisen.

Die erste Vorrichtung 110 ist ausgebildet, um einen Reibwert für einen Kontakt zwischen einem Reifen eines Fahrzeugs 102 und einer Fahrbahn zu bestimmen. Hierbei ist die erste Vorrichtung 110 ausgebildet, um Sensorsignale 140 von den Fahrzeugsensoren 104, dem Umgebungssensor 106 und dem Infrastruktursensor 108 einzulesen. Die Sensorsignale 140 repräsentieren Zustandsdaten bzw. physikalische Messwerte, beispielsweise Umgebungsdaten für einen Umgebungsbereich von dem Umgebungssensor 106, Infrastrukturdaten für den Umgebungsbereich von dem Infrastruktursensor 108 und/oder Fahrdaten und/oder Umgebungsdaten der Fahrzeuge 102 von den Fahrzeugsensoren 104. Ferner ist die erste Vorrichtung 110 ausgebildet, um unter Verwendung der Sensorsignale 140 den Reibwert zu bestimmen und ein den Reibwert repräsentierendes oder aufweisendes Steuersignal 150 bereitzustellen oder auszugeben. Die zweite Vorrichtung 120 ist ausgebildet, um unter Verwendung des Steuersignals 150 eine Fahrzeugfunktion des Fahrzeugs 102, hier des Empfängerfahrzeugs 102, zu steuern.

Das System 100 ist so aufgebaut, dass viele Fahrzeuge 102 beispielsweise über ein Mobilfunknetz die Sensorsignale 140 bzw. Sensorikdaten an das Server-Backend 130 bzw. die in demselben realisierte erste Vorrichtung 110 senden. Hinzu kommen Infrastrukturdaten, beispielsweise Straßensensorikdaten, sowie Umgebungsdaten, beispielsweise Wetterdaten, die abgefragt werden können. Mittels der ersten Vorrichtung 110 werden die Sensorsignale 140 gemäß einem Ausführungsbeispiel eines linearen Regressionsmodells, welches sich ständig mit neuen Daten aktualisiert, in Zeitfolgen verarbeitet, um einen ortsabhängigen Reibwert zu aggregieren. Dieser aggregierte Reibwert kann in Form des Steuersignals 150 an weitere Fahrzeuge 102 ortsgenau weitergegeben werden, um teilnehmenden Fahrzeugen 102 so eine Information über den derzeitigen Reibwert in einer jeweiligen Region bzw. einem jeweiligen Umgebungsbereich zu geben.

Fig. 2 zeigt eine schematische Darstellung von Teilen des Systems aus Fig. 1. Von dem System aus Fig. 1 sind hierbei in der Darstellung von Fig. 2 beispielhaft lediglich die erste Vorrichtung 110 und das Empfängerfahrzeug 102 mit der zweiten Vorrichtung 120 und einer Fahrzeugfunktion 260 gezeigt. Bei der Fahrzeugfunktion 260 handelt es sich beispielsweise um eine Assistenzfunktion eines Assistenzsystems des Empfängerfahrzeugs 102.

Die erste Vorrichtung 110 weist eine Verarbeitungseinrichtung 212 und eine Ermittlungseinrichtung 214 auf. Die Verarbeitungseinrichtung 212 ist ausgebildet, um die Sensorsignale 140 zu verarbeiten, um verarbeitete Sensorsignale 245 zu erzeugen. Die Sensorsignale 140 repräsentieren mindestens von zumindest einer Erfassungseinrichtung eingelesene, mit dem Reibwert korrelierbare Zustandsdaten. Die verarbeiteten Sensorsignale 245 repräsentieren zumindest einen vorläufigen Reibwert. Die Ermittlungseinrichtung 214 ist ausgebildet, um unter Verwendung der verarbeiteten Sensorsignale 245 und eines Regressionsmodells, insbesondere für lineare Regression, den Reibwert zu ermitteln. Die erste Vorrichtung 110 ist ausgebildet, um den ermittelten Reibwert in Gestalt des Steuersignals 150 auszugeben oder zur Ausgabe bereitzustellen.

Die zweite Vorrichtung 120 weist eine Empfangseinrichtung 222 und eine Ansteuereinrichtung 224 auf. Dabei ist die Empfangseinrichtung 222 ausgebildet, um das Steuersignal 150 von der ersten Vorrichtung 110 zu empfangen. Ferner ist die Empfangseinrichtung 222 ausgebildet, um ein empfangenes Steuersignal 255 an die Ansteuereinrichtung 224 auszugeben oder bereitzustellen. Die Ansteuereinrichtung 224 ist ausgebildet, um das empfangene Steuersignal 255 an die Fahrzeugfunktion 260 weiterzuleiten, um die Fahrzeugfunktion 260 unter Verwendung des empfangenen Steuersignals 255 anzusteuern.

Alternativ kann die Fahrzeugfunktion 260 direkt unter Verwendung des Steuersignals 150 ansteuerbar sein. Hierbei kann die erste Vorrichtung 110 ausgebildet sein, um ein geeignetes Ansteuersignal 150 für die Fahrzeugfunktion 260 bereitzustellen oder auszugeben. Dabei kann die zweite Vorrichtung weggelassen sein.

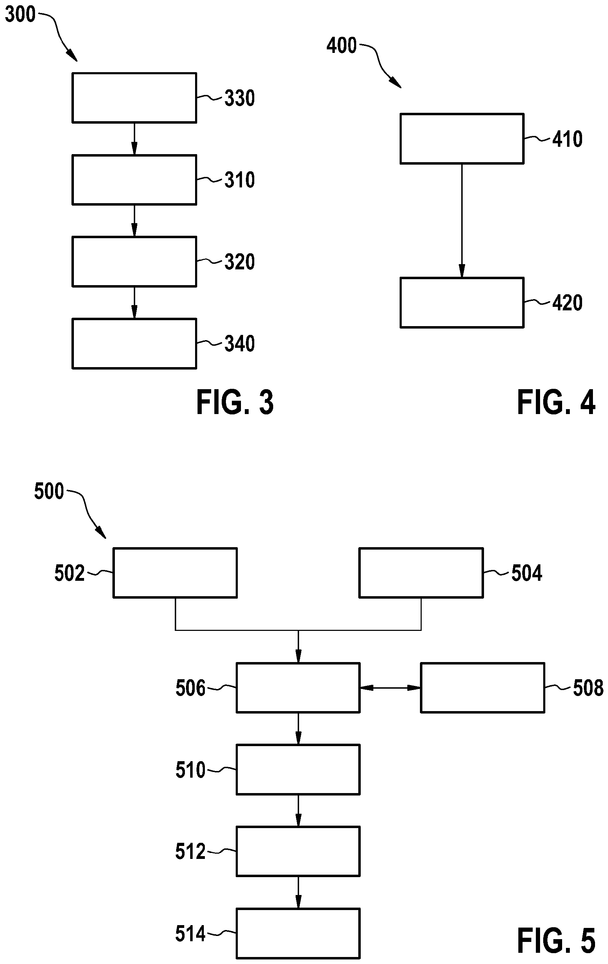

Fig. 3 zeigt ein Ablaufdiagramm eines Verfahrens 300 zum Bestimmen gemäß einem Ausführungsbeispiel. Das Verfahren 300 ist ausführbar, um einen Reibwert für einen Kontakt zwischen einem Reifen eines Fahrzeugs und einer Fahrbahn zu bestimmen. Dabei ist das Verfahren 300 zum Bestimmen in Verbindung mit dem System aus Fig. 1 bzw. Fig. 2 ausführbar. Auch ist das Verfahren 300 zum Bestimmen unter Verwendung bzw. mittels der ersten Vorrichtung aus Fig. 1 bzw. Fig. 2 ausführbar.

In einem Schritt 310 des Verarbeitens werden bei dem Verfahren 300 zum Bestimmen Sensorsignale verarbeitet, um verarbeitete Sensorsignale zu erzeugen. Die Sensorsignale repräsentieren mindestens von zumindest einer Erfassungseinrichtung eingelesene, mit dem Reibwert korrelierbare Zustandsdaten. Die verarbeiteten Sensorsignale repräsentieren dabei zumindest einen vorläufigen Reibwert. Nachfolgend wird in einem Schritt 320 des Ermittelns unter Verwendung der verarbeiteten Sensorsignale und eines Regressionsmodells der Reibwert ermittelt.

Gemäß einem Ausführungsbeispiel werden im Schritt 320 des Ermittelns mehrere vorläufige Reibwerte für jeweils einen Zeitpunkt abhängig von Konfidenzintervallen der mehreren vorläufigen Reibwerte und/oder unter Verwendung gewichteter Mittelwerte zu dem Reibwert aggregiert. Gemäß einem weiteren Ausführungsbeispiel wird im Schritt 320 des Ermittelns das Regressionsmodell abhängig von aktuellen und/oder vergangenen vorläufigen Reibwerten und/oder unter Verwendung der Methode der kleinsten Quadrate geändert. Zusätzlich oder alternativ wird gemäß einem Ausführungsbeispiel im Schritt 310 des Verarbeitens eine Mehrzahl von Regressionsmodellen verwendet. Erfindungsgemäß wird für jede einer Mehrzahl von geografischen Regionen ein dediziertes Regressionsmodell der Mehrzahl von Regressionsmodellen verwendet.

Gemäß einem Ausführungsbeispiel wird der Reibwert im Schritt 320 des Ermittelns für eine den Umgebungsbereich aufweisende geografische Region ermittelt. Hierbei wird ferner im Schritt 320 des Ermittelns der Reibwert unter Verwendung zumindest eines bereits ermittelten Reibwertes für mindestens eine zu der geografischen Region benachbarte, weitere geografische Region ermittelt. Das Verfahren 300 zum Bestimmen weist gemäß einem Ausführungsbeispiel auch einen Schritt 330 des Einlesens der Sensorsignale von einer Schnittstelle zu der zumindest einen Erfassungseinrichtung auf. Auch weist das Verfahren 300 zum Bestimmen optional einen Schritt 340 des Bereitstellens des Reibwerts in Gestalt eines Steuersignals zur Ausgabe an eine Schnittstelle zu mindestens einem Fahrzeug auf.

Fig. 4 zeigt ein Ablaufdiagramm eines Verfahrens 400 zum Steuern gemäß einem Ausführungsbeispiel. Das Verfahren 400 ist ausführbar, um eine Fahrzeugfunktion eines Fahrzeugs zu steuern. Dabei ist das Verfahren 400 zum Steuern in Verbindung mit dem System aus Fig. 1 bzw. Fig. 2 ausführbar. Auch ist das Verfahren 400 zum Steuern unter Verwendung bzw. mittels der zweiten Vorrichtung aus Fig. 1 bzw. Fig. 2 ausführbar.

Bei dem Verfahren wird ein Reibwert gemäß einer Ausführngsform des vorstehend genannten Verfahrens bestimmt.

In einem Schritt 410 des Empfangens wird bei dem Verfahren 400 ein Steuersignal empfangen, das unter Verwendung des Reibwertes erzeugt ist.

In einem nachfolgenden Schritt 420 des Ansteuerns wird unter Verwendung des im Schritt 410 des Empfangens empfangenen Steuersignals die Fahrzeugfunktion angesteuert.

Fig. 5 zeigt ein Ablaufdiagramm eines Bestimmungsprozesses 500 gemäß einem Ausführungsbeispiel. Der Bestimmungsprozess 500 ist im Zusammenhang mit dem Verfahren zum Bestimmen aus Fig. 3 oder einem ähnlichen Verfahren ausführbar. Ferner ist der Bestimmungsprozess 500 in Verbindung mit dem System aus Fig. 1 bzw. Fig. 2, insbesondere in Verbindung mit der ersten Vorrichtung ausführbar.

In einem Block 502 werden Sensorsignale in Gestalt von Sensorikdaten von Fahrzeugen empfangen bzw. von Fahrzeugen gesendet. In einem Block 504 werden Sensorsignale von einer straßenseitigen Sensorik bzw. von Infrastruktursensoren empfangen bzw. gesendet. In einem Block 506 nimmt die Server-Einrichtung bzw. ein Serverinterface bzw. Backend nimmt die Sensorsignale entgegen und fragt beispielsweise Wetterdaten an. In einem Block 508 stellt ein Wetterdienst als Umgebungssensor Umgebungsdaten als Sensorsignale bereit. In einem Block 510 erfolgt eine Datenvorverarbeitung, beispielsweise eine Featureset-Anpassung. In einem Block 512 werden die vorverarbeiteten Daten bzw. Time-Series-Daten unter Verwendung eines Regressionsalgorithmus zu einem Reibwert verarbeitet und Reibwerte für folgende Zeitschritte prädiziert. In einem Block 514 werden die verarbeiteten Daten an Endpunkte weitergegeben, beispielsweise an zumindest ein Fahrzeug.

Diese zu einem Reibwert verarbeiteten Daten können in Gestalt eines Steuersignals zum Beispiel genutzt werden, um beispielsweise bei einem Fahrzeug für hochautomatisiertes Fahren insbesondere sichere Kurvengeschwindigkeiten nach aktuell vorherrschendem Reibwert einzustellen.

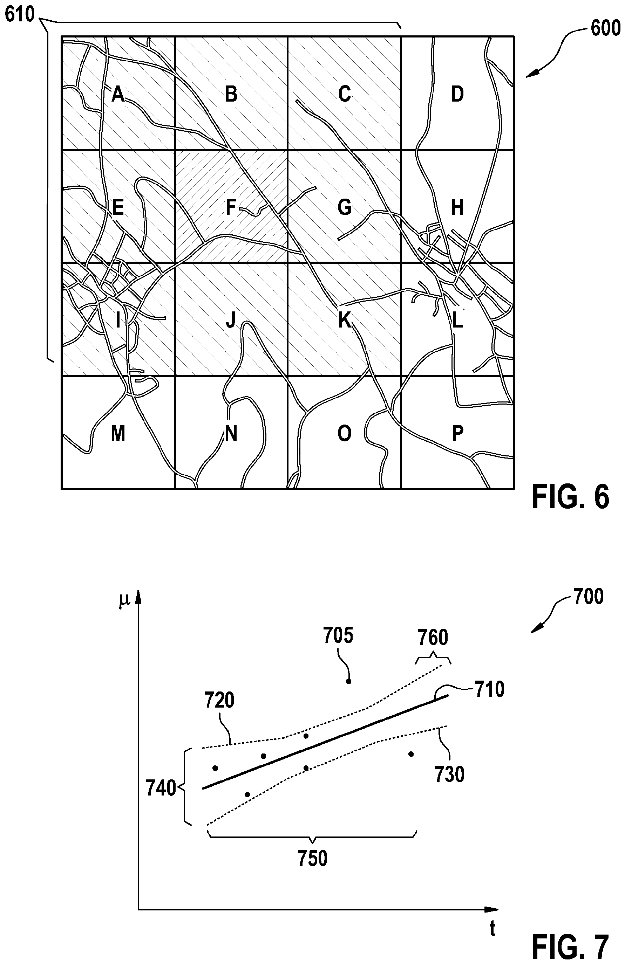

Fig. 6 zeigt eine schematische Darstellung einer Reibwertkarte 600 mit geografischen Regionen gemäß einem Ausführungsbeispiel. Die Reibwertkarte 600 weist lediglich beispielhaft 16 geografische Regionen A bis P auf. Für jede der geografischen Regionen A bis P der Reibwertkarte 600 ist ein Reibwert gemäß dem Verfahren zum Bestimmen aus Fig. 3 oder einem ähnlichen Verfahren bzw. mittels der ersten Vorrichtung aus Fig. 1 bzw. Fig. 2 oder einer ähnlichen Vorrichtung bestimmt.

Die Reibwertkarte 600 repräsentiert eine Näherung für eine räumliche Modellierung der ortsabhängig bestimmten Reibwerte. Hierfür können verschiedene Ansätze gewählt werden. Zur Veranschaulichung ist in Fig. 6 ein Grid-Ansatz mit quadratischen und gleich großen geografischen Regionen A bis P bzw. Bereichen gewählt. Zur Berechnung des Reibwerts wird für jede dieser geografischen Regionen A bis P ein Regressionsmodell, beispielsweise für lineare Regression, verwendet. Wird beispielsweise der Reibwert für die geografische Region F bestimmt, so werden gemäß einem Ausführungsbeispiel auch umliegende bzw. benachbarte geografische Regionen 610 mit in die Bestimmung einbezogen. Bezüglich der geografischen Region F umfassen die benachbarten geografischen Regionen 610 hierbei insbesondere die geografischen Regionen A, B, C, E, G, I, J und K. Optional können die benachbarten geografischen Regionen 710 auch mehr oder weniger als die geografischen Regionen A, B, C, E, G, I, J und K umfassen.

Fig. 7 zeigt ein Reibwert-Zeit-Diagramm 700 gemäß einem Ausführungsbeispiel. Hierbei ist an der Abszissenachse die Zeit t aufgetragen, wobei an der Ordinatenachse der Reibwert µ aufgetragen ist. In dem Reibwert-Zeit-Diagramm 700 ist ein zeitlicher Verlauf des bei dem Verfahren zum Bestimmen aus Fig. 3 oder einem ähnlichen Verfahren bzw. in der ersten Vorrichtung aus Fig. 1 bzw. Fig. 2 oder einer ähnlichen Vorrichtung verwendeten Regressionspolynoms für eine der geografischen Regionen aus Fig. 6 veranschaulicht.

In das Reibwert-Zeit-Diagramm 700 sind eine Regressionsgerade 710, ein erster Graph 720 und ein zweiter Graph 730 eingetragen. Die Regressionsgerade 710 repräsentiert den aus Zustandsdaten bzw. Sensorsignale repräsentierenden Datenpunkten 705 bestimmten Reibwert µ für die geografische Region. Dabei ist die Regressionsgerade 710 zwischen dem ersten Graphen 720 und dem zweiten Graphen 730 angeordnet. Der erste Graph 720 und der zweite Graph 730 begrenzen ein Konfidentintervall 740 um die Regressionsgerade 710. Die Regressionsgerade 710 ist bei Anwendung des bei dem Verfahren zum Bestimmen aus Fig. 3 oder einem ähnlichen Verfahren bzw. in der ersten Vorrichtung aus Fig. 1 bzw. Fig. 2 oder einer ähnlichen Vorrichtung verwendeten Regressionspolynoms in einen Schätzbereich 750 auf Datenbasis und in einen Prädiktionsbereich 760 für Vorhersagen relativ zur Zeitachse einteilbar.

Unter Bezugnahme auf die vorstehend beschrieben Figuren wird nachfolgend ein Ausführungsbeispiel im Hinblick auf die Regression noch detaillierter und mit anderen Worten erläutert.

Der Reibwert µ kann mittels linearer Regression dargestellt und prädiziert werden. Es handelt sich bei dem Regressionsmodell bzw. Regressionspolynom um ein lineares Polynom, welches insbesondere mittels der Methode kleinster Quadrate, insbesondere mit möglicher Gewichtung, in Zeitschritten bzw. abhängig von der Zeit wiederholt oder kontinuierlich mit neuen und historischen Daten neu berechnet bzw. aktualisiert wird. So kann der Zeitverlauf des Reibwertes µ nachgebildet, ein Reibwert µ zu einem Zeitpunkt als Punkt auf der Regressionsgeraden 710 berechnet (Tiefpasswirkung) und ein Reibwert µ in der nahen Zukunft prädiziert werden. Mittels verschiedener Plausibilitätsprüfungen können auch sich schnell ändernde vorläufige Reibwerte, die nicht zur linearen Regressionskurve bzw. Regressionsgeraden 710 passen, detektiert werden und eine neue Polynomberechnung ausgelöst werden. Dieses Regressionsmodell wird auf die einzelnen Sensoreingangsdaten bzw. Sensorsignale 140 angewendet, die zuvor über physikalische oder andere Modelle in den vorläufigen Reibwert überführt wurden. Die errechneten vorläufigen Reibwerte zu einem Zeitpunkt werden dann in einem regelbasierten Ansatz abhängig von ihren Vertrauensintervallen mit der Methode des gewichteten Mittelwerts zu einem Ergebnisreibwert bzw. dem Reibwert µ aggregiert. Dieser Reibwert dient dann beispielsweise als ein Eingangswert zu einem Zeitpunkt für das Regressionsmodell. Das aggregierte Konfidenzintervall kann als Güte interpretiert und zur Gewichtung bei der Modellberechnung verwendet werden.

Als mögliche Eingangsgrößen sind von den Zustandsdaten beispielsweise Umgebungsdaten, insbesondere Wetterdaten, wie zum Beispiel Temperatur, Regen/Schnee, Luftfeuchtigkeit, Luftdruck, Sonneneinstrahlung, etc., Infrastrukturdaten von Straßensensorik, wie zum Beispiel Temperatur des Fahrbahnbelags, Feuchte auf Straßenoberfläche, Anzahl von Fahrzeugen etc., Fahrdaten, wie zum Beispiel eine Bestimmung des ausgenutzten Reibwerts durch Inertialsensorik/Odometrie, Schlupf, etc., eine Bestimmung des ausgenutzten Reibwerts durch ein Lenksystem, eine Bestimmung des ausnutzbaren Reibwerts durch ABS- (Antiblockiersystem) oder ESP-Eingriffe (elektronisches Stabilitätspaket), Infrastrukturdaten, wie zum Beispiel eine Bestimmung des ausnutzbaren Reibwerts durch Straßensensorik, insbesondere Temperatur des Fahrbahnbelags, Feuchte auf Straßenoberfläche, Anzahl von Fahrzeugen etc., Umgebungsdaten, wie beispielsweise eine Bestimmung des ausnutzbaren Reibwerts aus Umfeldsensorik, wie beispielsweise Kamera, Radar, Wärmebild, Lidar etc., und ein Reibwert bzw. Zustand an umliegenden Orten bzw. in umliegenden geografischen Regionen verwendbar.

Der aggregierte Ergebnisreibwert bzw. Reibwert µ umfasst gemäß einem Ausführungsbeispiel wiederum ein Vertrauensintervall und den aktuell geschätzten Reibwert an einem Ort zu einem Zeitpunkt.

Zur Berechnung des Reibwerts µ wird gemäß einem Ausführungsbeispiel für jede der geografischen Regionen A, B, C, D, E, F, G, H, I, J, K, L, M, N, O, P für alle verfügbaren Sensorikwerte bzw. Sensorsignale 140 ein parametrisiertes Regressionsmodell mit historischen, persistierten Daten verwendet. Es kann somit auch für jede der geografischen Regionen A, B, C, D, E, F, G, H, I, J, K, L, M, N, O, P ein Reibwert µ unabhängig bestimmt und/oder prädiziert werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Bestimmen eines Reibwerts (µ) für einen Kontakt zwischen einem Reifen eines Fahrzeugs (102) und einer Fahrbahn, wobei das Verfahren (300) folgende Schritte aufweist:
Verarbeiten (310) von Sensorsignalen (140), um verarbeitete Sensorsignale (245) zu erzeugen, wobei die Sensorsignale (140) mindestens von zumindest einer Erfassungseinrichtung (104, 106; 108) eingelesene, mit dem Reibwert (µ) korrelierbare Zustandsdaten repräsentieren, wobei die verarbeiteten Sensorsignale (245) zumindest einen vorläufigen Reibwert repräsentieren; und
Ermitteln (320) des Reibwerts (µ) unter Verwendung der verarbeiteten Sensorsignale (245) und eines Regressionsmodells,
**dadurch gekennzeichnet, dass** im Schritt (320) des Ermittelns eine Mehrzahl von Regressionsmodellen verwendet wird, wobei für jede einer Mehrzahl von geografischen Regionen (A, B, C, D, E, F, G, H, I, J, K, L, M, N, O, P) ein dediziertes Regressionsmodell der Mehrzahl von Regressionsmodellen verwendet wird.

2. Verfahren (300) gemäß Anspruch 1, **dadurch gekennzeichnet, dass** im Schritt (320) des Ermittelns mehrere vorläufige Reibwerte für jeweils einen Zeitpunkt abhängig von Konfidenzintervallen der mehreren vorläufigen Reibwerte und/oder unter Verwendung gewichteter Mittelwerte zu dem Reibwert aggregiert werden.

3. Verfahren (300) gemäß einem der vorangegangenen Ansprüche, **dadurch gekennzeichnet, dass** im Schritt (320) des Ermittelns das Regressionsmodell abhängig von aktuellen und/oder vergangenen vorläufigen Reibwerten und/oder unter Verwendung der Methode der kleinsten Quadrate geändert wird.

4. Verfahren (300) gemäß einem der vorangegangenen Ansprüche, **dadurch gekennzeichnet, dass** im Schritt (320) des Ermittelns der Reibwert für eine den Umgebungsbereich aufweisende geografische Region (A, B, C, D, E, F, G, H, I, J, K, L, M, N, O, P) ermittelt wird, wobei im Schritt (320) des Ermittelns der Reibwert (µ) unter Verwendung zumindest eines Reibwertes für mindestens eine zu der geografischen Region (A, B, C, D, E, F, G, H, I, J, K, L, M, N, O, P) benachbarte, weitere geografische Region (710) ermittelt wird.

5. Verfahren (300) gemäß einem der vorangegangenen Ansprüche, **dadurch gekennzeichnet, dass** im Schritt (310) des Verarbeitens Sensorsignale (140) verarbeitet werden, die von einem Umgebungssensor (104) zumindest eines Fahrzeugs (102), einem Infrastruktursensor (108) für den Umgebungsbereich und/oder mindestens einem Fahrdatensensor (104) des Fahrzeugs (102) eingelesene Zustandsdaten repräsentieren und/oder Umgebungsdaten für den Umgebungsbereich, Infrastrukturdaten für den Umgebungsbereich und/oder Fahrdaten des Fahrzeugs (102) repräsentieren.

6. Verfahren (400) zum Steuern einer Fahrzeugfunktion (260) eines Fahrzeugs (102), wobei ein Reibwert (µ) gemäß einem der vorangegangenen Ansprüche erzeugt wird, und das Verfahren (400) zusätzlich folgende Schritte aufweist: Empfangen (410) eines Steuersignals (150), das unter Verwendung des Reibwertes (µ) erzeugt ist; und
Ansteuern (420) der Fahrzeugfunktion (260) unter Verwendung des empfangenen Steuersignals (255).

7. Vorrichtung (110; 120), die eingerichtet ist, um Schritte eines Verfahrens (300; 400) gemäß einem der vorangegangenen Ansprüche in entsprechenden Einheiten auszuführen und/oder anzusteuern.

8. Computerprogramm, das dazu eingerichtet ist, ein Verfahren (300; 400) gemäß einem der vorangegangenen Ansprüche auszuführen und/oder anzusteuern.

9. Maschinenlesbares Speichermedium, auf dem das Computerprogramm nach Anspruch 8 gespeichert ist.

## Claims

1. Method (300) for determining a coefficient of friction (µ) for contact between a tyre of a vehicle (102) and a roadway, wherein the method (300) comprises the following steps:
processing (310) sensor signals (140) in order to generate processed sensor signals (245), wherein the sensor signals (140) represent at least state data read in from at least one detection device (104, 106; 108) and able to be correlated with the coefficient of friction (µ), wherein the processed sensor signals (245) represent at least one provisional coefficient of friction; and
ascertaining (320) the coefficient of friction (µ) using the processed sensor signals (245) and a regression model,
**characterized in that** a plurality of regression models are used in the ascertaining step (320), wherein a dedicated regression model from the plurality of regression models is used for each of a plurality of geographical regions (A, B, C, D, E, F, G, H, I, K, J, L, M, N, O, P).

2. Method (300) according to Claim 1, **characterized in that**, in ascertaining step (320), a plurality of provisional coefficients of friction for a respective time are aggregated to form the coefficient of friction on the basis of confidence intervals of the plurality of provisional coefficients of friction and/or using weighted averages.

3. Method (300) according to either of the preceding claims, **characterized in that**, in ascertaining step (320), the regression model is changed on the basis of current and/or past provisional coefficients of friction and/or using the least squares method.

4. Method (300) according to one of the preceding claims, **characterized in that**, in ascertaining step (320), the coefficient of friction is ascertained for a geographical region (A, B, C, D, E, F, G, H, I, K, J, L, M, N, O, P) containing the surrounding area, wherein, in ascertaining step (320), the coefficient of friction (µ) is ascertained using at least one coefficient of friction for at least one further geographical region (710) neighbouring the geographical region (A, B, C, D, E, F, G, H, I, K, J, L, M, N, O, P).

5. Method (300) according to one of the preceding claims, **characterized in that** processing step (310) comprises processing sensor signals (140) that represent state data read in from a surroundings sensor (104) of at least one vehicle (102), an infrastructure sensor (108) for the surrounding area and/or at least one driving data sensor (104) of the vehicle (102) and/or represent surroundings data for the surrounding area, infrastructure data for the surrounding area and/or driving data of the vehicle (102) .

6. Method (400) for controlling a vehicle function (260) of a vehicle (102), wherein a coefficient of friction (µ) is generated according to one of the preceding claims, and the method (400) additionally comprises the following steps:
receiving (410) a control signal (150) that is generated using the coefficient of friction (µ); and
actuating (420) the vehicle function (260) using the received control signal (255).

7. Device (110; 120) designed to carry out and/or to actuate steps of a method (300; 400) according to one of the preceding claims in corresponding units.

8. Computer program designed to carry out and/or to actuate a method (300; 400) according to one of the preceding claims.

9. Machine-readable storage medium on which the computer program according to Claim 8 is stored.

## Revendications

1. Procédé (300) permettant de déterminer un coefficient de frottement (µ) pour un contact entre un pneumatique d'un véhicule (102) et une chaussée, le procédé (300) présentant les étapes suivantes consistant à :
traiter (310) des signaux de capteur (140) afin de générer des signaux de capteur traités (245), les signaux de capteur (140) représentant au moins des données d'état lues par au moins un dispositif d'acquisition (104, 106 ; 108) et pouvant être mises en corrélation avec le coefficient de frottement (µ), les signaux de capteur traités (245) représentant au moins un coefficient de frottement provisoire ; et
établir (320) le coefficient de frottement (µ) en utilisant les signaux de capteur traités (245) et un modèle de régression,
**caractérisé en ce qu'**à l'étape (320) d'établissement, une pluralité de modèles de régression est utilisée, dans lequel un modèle de régression dédié de la pluralité de modèles de régression est utilisé pour chacune d'une pluralité de régions géographiques (A, B, C, D, E, F, G, H, I, J, K, L, M, N, O, P).

2. Procédé (300) selon la revendication 1, **caractérisé en ce qu'**à l'étape (320) d'établissement, plusieurs coefficients de frottement provisoires sont agrégés en coefficient de frottement pour respectivement un instant en fonction d'intervalles de confiance des plusieurs coefficients de frottement provisoires et/ou en utilisant des moyennes pondérées.

3. Procédé (300) selon l'une quelconque des revendications précédentes, **caractérisé en ce qu'**à l'étape (320) d'établissement, le modèle de régression est modifié en fonction de coefficients de frottement provisoires actuels et/ou passés et/ou en utilisant la méthode des moindres carrés.

4. Procédé (300) selon l'une quelconque des revendications précédentes, **caractérisé en ce qu'**à l'étape (320) d'établissement, le coefficient de frottement est établi pour une région géographique (A, B, C, D, E, F, G, H, I, J, K, L, M, N, O, P) présentant la zone d'environnement, dans lequel à l'étape (320) d'établissement, le coefficient de frottement (µ) est établi en utilisant au moins un coefficient de frottement pour au moins une autre région géographique (710) voisine de la région géographique (A, B, C, D, E, F, G, H, I, J, K, L, M, N, O, P).

5. Procédé (300) selon l'une quelconque des revendications précédentes, **caractérisé en ce qu'**à l'étape (310) de traitement, des signaux de capteur (140) sont traités qui représentent des données d'état lues par un capteur d'environnement (104) d'au moins un véhicule (102), un capteur d'infrastructure (108) pour la zone d'environnement et/ou au moins un capteur de données de conduite (104) du véhicule (102), et/ou représentent des données d'environnement pour la zone d'environnement, des données d'infrastructure pour la zone d'environnement et/ou des données de conduite du véhicule (102).

6. Procédé (400) permettant de commander une fonction de véhicule (260) d'un véhicule (102), un coefficient de frottement (µ) étant généré selon l'une quelconque des revendications précédentes, et le procédé (400) présentant en outre les étapes suivantes consistant à :
recevoir (410) un signal de commande (150) qui est généré en utilisant le coefficient de frottement (µ) ; et
piloter (420) la fonction de véhicule (260) en utilisant le signal de commande reçu (255).

7. Dispositif (110 ; 120), qui est conçu pour exécuter et/ou piloter des étapes d'un procédé (300 ; 400) selon l'une quelconque des revendications précédentes dans des unités correspondantes.

8. Programme informatique, qui est conçu pour exécuter et/ou piloter un procédé (300 ; 400) selon l'une quelconque des revendications précédentes.

9. Support de stockage lisible par machine, sur lequel est stocké le programme informatique selon la revendication 8.
